# EUROPÄISCHE PATENTANMELDUNG

(11) **EP 3 955 423 A1**
(43) Veröffentlichungstag der Anmeldung: **16.02.2022**
(21) Anmeldenummer: 20190196.4
(22) Anmeldetag: 10.08.2020
(51) Int. Cl.: H02K 1/16, H02K 3/14, H02K 3/30, H02K 3/34, H02K 3/48, H02K 15/00, H02K 15/085

(54) **ELEKTRISCHE MASCHINE MIT WICKLUNGEN AUS LITZENLEITERN**

(71) Anmelder: Siemens Aktiengesellschaft, 80333 München (DE)
(72) Erfinder: Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE)

(57) **Zusammenfassung**

Eine elektrische Maschine (1) weist ein Statorblechpaket (3) auf, das seinerseits Statornuten (7) aufweist, die parallel zu einer Rotationsachse (6) der elektrischen Maschine (1) verlaufen und kreisförmig um die Rotationsachse (6) herum verteilt angeordnet sind. Die Statornuten (7) sind zur Rotationsachse (6) hin offen, weisen aber an ihrem der Rotationsachse (6) zugewandten Ende einen gegenüber der übrigen Statornut (7) verjüngten Spaltbereich (8) auf oder sind an ihrer von der Rotationsachse (6) abgewandten Seite offen, weisen aber an ihrem von der Rotationsachse (6) abgewandten Ende einen gegenüber der übrigen Statornut (7) verjüngten Spaltbereich (8) auf. Die Spaltbereiche (8) weisen in Umfangsrichtung um die Rotationsachse (6) herum gesehen eine lichte Weite (w) auf. In den Statornuten (7) sind die Wicklungen (9) eines Statorwicklungssystems angeordnet. Die Wicklungen (9) in den Statornuten (7) sind als gelegte Wicklungen ausgebildet. Sie bestehen aus Litzenleitern, die ihrerseits jeweils mehrere Drähte (13) aufweisen. Die Litzenleiter weisen einen Querschnitt auf, der größer als der Querschnitt eines Kreises ist, dessen Durchmesser (d) gleich der Hälfte der lichten Weite (w) der Spaltbereiche (8) ist.

## Beschreibung

Die vorliegende Erfindung geht aus von einer elektrischen Maschine,
- wobei die elektrische Maschine ein Statorblechpaket aufweist,
- wobei das Statorblechpaket eine Anzahl von Statornuten aufweist, die parallel zu einer Rotationsachse der elektrischen Maschine verlaufen und kreisförmig um die Rotationsachse herum verteilt angeordnet sind,
- wobei die Statornuten zur Rotationsachse hin offen sind, an ihrem der Rotationsachse zugewandten Ende aber einen gegenüber der übrigen Statornut verjüngten Spaltbereich aufweisen oder an ihrer von der Rotationsachse abgewandten Seite offen sind, an ihrem von der Rotationsachse abgewandten Ende aber einen gegenüber der übrigen Statornut verjüngten Spaltbereich aufweisen,
- wobei die Spaltbereiche in Umfangsrichtung um die Rotationsachse herum gesehen eine lichte Weite aufweisen,
- wobei in den Statornuten die Wicklungen eines Statorwicklungssystems angeordnet sind,
- wobei die Wicklungen in den Statornuten als gelegte Wicklungen ausgebildet sind.

Derartige elektrische Maschinen sind allgemein bekannt. Rein beispielhaft kann auf die DE 10 2014 009 799 A1 und auf die WO 2020/058048 A1 verwiesen werden.

Eine elektrische Maschine weist unter anderem einen Stator auf, der in der Regel als geschichtetes Blechpaket ausgebildet ist. Bei der üblichen Ausgestaltung der elektrischen Maschine als rotatorische elektrische Maschine mit einem Innenrotor sind die Statornuten nach radial innen, also auf die Rotationsachse zu, offen. In diesem Fall weisen die Statornuten zumindest an ihrem radial inneren Ende einen gegenüber der übrigen Statornut verjüngten Spaltbereich auf. Bei der alternativen Ausgestaltung der elektrischen Maschine als rotatorische elektrische Maschine mit einem Außenrotor sind die Statornuten nach radial außen, also von der Rotationsachse weg, offen. In diesem Fall weisen die Statornuten den gegenüber der übrigen Statornut verjüngten Spaltbereich an ihrem radial äußeren Ende auf. Aus rein elektromagnetischer Sicht sollte sich die Statornut so weit wie möglich verjüngen. Die lichte Weite der Spaltbereiche sollte also so klein wie möglich sein. Aus fertigungstechnischen Gründen muss jedoch eine hinreichend große Nutweite verbleiben, da anderenfalls die Wicklungen des Statorwicklungssystems nicht in die Statornuten eingebracht werden könnten.

Die elektrischen Wicklungen von elektrischen Maschinen werden in der Regel mit Leitern aus massiven Kupferdrähten gewickelt. Hierbei werden die Leiter zunächst mit einem elektrisch isolierenden Drahtlack beschichtet und dann zu der Wicklung geformt. Die Leiter weisen in der Regel einen runden Querschnitt auf. Ihr Durchmesser liegt in der Regel zwischen 0,5 mm und 1,5 mm. In manchen Fällen werden die Wicklungen mittels eines Nadelwicklers direkt auf den Stator gewickelt. In anderen Fällen werden die Wicklungen zuvor hergestellt und dann in das Statorblechpaket eingezogen. Je nach Herstellungsverfahren ist die in das Statorblechpaket eingezogene Wicklung eine sogenannte wilde Wicklung oder eine sogenannte gelegte Wicklung.

Bei einer wilden Wicklung verlaufen die einzelnen Leiter in der Regel nicht parallel zueinander, sondern können sich beispielsweise kreuzen. Bei einer gelegten Wicklung verlaufen die einzelnen Leiter parallel zueinander und kreuzen sich nicht. Dadurch kann zum einen der Füllgrad der Statornut gegenüber einer wilden Wicklung vergrößert werden. Zum anderen können elektrische Spannungen zwischen in der jeweiligen Statornut nebeneinander angeordneten Windungen minimal gehalten werden. In beiden Fällen ist jedoch der Drahtlack erforderlich, um die Leiter gegeneinander elektrisch zu isolieren.

Sowohl der Drahtlack als solcher als auch die bei Drähten mit rundem Querschnitt unvermeidbaren Zwischenräume zwischen den Drähten verringern den Füllgrad der Statornuten und damit die Leistungsdichte.

Weiterhin ist bekannt, anstelle von Kupferdrähten mit rundem Querschnitt Kupferdrähte mit rechteckigem Querschnitt zu verwenden, sogenannte Flachdrähte. Derartige Flachdrähte müssen allerdings insbesondere bei Niederspannungsmotoren stets mittels eines Nadelwicklers oder sogar manuell (von Hand) gelegt werden. Dies ist in der Regel zeitaufwendig und nicht rentabel. Eine weitere Alternative ist, in die jeweilige Nut axial einen einzelnen Flachdraht einzuführen, der die jeweilige Nut ausfüllt. In diesem Fall müssen die Flachdrähte im Bereich der Wickelköpfe nachträglich miteinander verbunden werden.

Es ist weiterhin bekannt, die Wicklungen aus Litzenleitern herzustellen. Die Litzenleiter weisen jedoch nur einen relativ geringen Querschnitt auf. Im Ergebnis stellt sich dadurch ein niedrigerer Füllgrad der Statornuten ein als bei Verwendung von Kupferdrähten. Dies hat seine Ursache darin, dass der Querschnitt der Litzenleiter auf den Querschnitt der Runddrähte beschränkt ist, die Litzenleiter jedoch jeweils von einer Isolationsschicht umgeben sind, welche eine größere Dicke aufweist als der auf die massiven Kupferdrähte aufgebrachte Drahtlack.

Die Aufgabe der vorliegenden Erfindung besteht darin, eine elektrische Maschine zu schaffen, die einfach herstellbar ist und deren Leistungsdichte gegenüber elektrischen Maschinen des Standes der Technik vergrößert ist.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 8.

Erfindungsgemäß wird eine elektrische Maschine der eingangs genannten Art dadurch ausgestaltet,
- dass die Wicklungen aus Litzenleitern bestehen, die ihrerseits jeweils mehrere Drähte aufweisen,
- dass die Litzenleiter einen Querschnitt aufweisen und
- dass der Querschnitt der Litzenleiter größer als der Querschnitt eines Kreises ist, dessen Durchmesser gleich der Hälfte der lichten Weite der Spaltbereiche ist.

Da die Dicke der Isolationsschicht unabhängig vom Querschnitt der Litzenleiter ist, verkleinert sich bei zunehmendem Querschnitt der Litzenleiter der Anteil, der auf die Isolationsschichten entfällt. Dadurch kann, bezogen auf den jeweiligen Litzenleiter, der Füllgrad der Statornuten erhöht werden. Da weiterhin die Litzenleiter auch in ihrer Querschnittsform in gewissem Umfang flexibel und verformbar sind, können die Litzenleiter dicht an dicht aneinander angelegt werden.

Ein Einbringen der Litzenleiter in die Statornuten durch die Spaltbereiche hindurch ist zwar nicht mehr oder nur mit erheblichen Schwierigkeiten möglich. Es ist aber möglich, die Litzenleiter zunächst auf ein Wickelwerkzeug zu wickeln und sodann mittels des Wickelwerkzeugs in Axialrichtung in die Statornuten einzuziehen. Die in der bereits genannten
WO 2020/058048 A1 erläuterten Vorgehensweisen sind direkt und unmittelbar anwendbar. Es ist lediglich erforderlich, als Leiter, mittels derer die Wicklungen hergestellt werden, als entsprechende Litzenleiter zu verwenden. Mit anderen Worten: Die in der WO 2020/058048 A1 erläuterten Vorgehensweisen sind selbstverständlich mit massiven Runddrähten ausführbar. Sie sind auch mit Litzenleitern mit einem relativ kleinen Querschnitt ausführbar. Sie sind aber auch - und das führt zum Herstellen der erfindungsgemäß ausgestalteten elektrischen Maschine - mit Litzenleitern mit einem relativ großen Querschnitt (so wie erfindungsgemäß definiert) ausführbar.

Im Rahmen der vorliegenden Erfindung ist es ohne weiteres möglich, dass die Drähte der Litzenleiter innerhalb des jeweiligen Litzenleiters nicht gegeneinander isoliert sind. Es ist also möglich, dass die einzelnen Drähte eines jeweiligen Litzenleiters nicht mit einem Drahtlack oder dergleichen versehen sind. Vielmehr kann es sich um "blanke" Drähte handeln. Die einzelnen Drähte eines jeweiligen Litzenleiters können sich also untereinander ohne weiteres mechanisch berühren und hierbei auch einen elektrischen Kontakt miteinander bilden.

An ihrer Außenseite weisen die Litzenleiter vorzugsweise eine jeweilige geflochtene Isolationsschicht auf. Die jeweilige Isolationsschicht kann zur Vermeidung von elektrischen Kontakten der Litzenleiter untereinander geschlossen sein. Die jeweilige Isolationsschicht weist also vorzugsweise keinerlei Zwischenräume, Lücken oder nicht überdeckte Stellen auf. Dadurch ist eine direkte Berührung der Drähte der Litzenleiter untereinander mit einem hiermit verbundenen elektrischen Kurzschluss der betroffenen Litzenleiter miteinander ausgeschlossen.

Vorzugsweise bestehen die Isolationsschichten aus Bändern. Dadurch kann eine geschlossene Überdeckung der Litzenleiter besonders einfach bewirkt werden.

Vorzugsweise sind Überlappungsbereiche der Bänder miteinander verklebt. Dadurch kann es nicht geschehen, dass sich die Bänder gegeneinander verschieben, so dass im Laufe der Zeit Zwischenräume, Lücken oder nicht überdeckte Stellen entstehen können.

Vorzugsweise weisen die Isolationsschichten eine Dicke von 100 µm bis 250 µm auf, insbesondere von 150 µm bis 200 µm. Dadurch kann eine hohe Isolation der Litzenleiter untereinander erreicht werden.

Vorzugsweise liegen die Litzenleiter direkt an den Wänden der Statornuten an. Es befinden sich in der jeweiligen Statornut also keine weiteren isolierenden Elemente, insbesondere keine Schichten aus Papier. Dadurch kann der Füllgrad der Statornuten maximiert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: einen Schnitt durch die elektrische Maschine von FIG 1 gemäß einer Linie II-II in FIG 1,
- FIG 3: einen Schnitt durch die elektrische Maschine der FIG 1 und 2 längs einer Linie III-III in FIG 2,
- FIG 4: eine einzelne Statornut im Querschnitt,
- FIG 5: einen einzelnen Litzenleiter im Querschnitt,
- FIG 6: eine Seitenansicht eines Litzenleiters,
- FIG 7: einen Ausschnitt einer Isolationsschicht,
- FIG 8: eine Seitenansicht eines Geflechts und
- FIG 9: einen Schnitt durch eine Isolationsschicht.

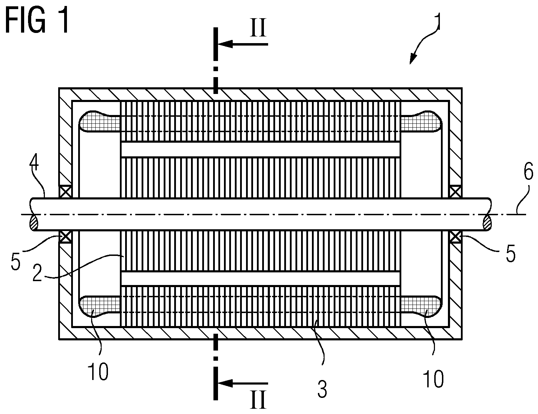

Gemäß FIG 1 weist eine rotatorische elektrische Maschine 1 einen Rotor 2 und ein Statorblechpaket 3 auf. Der Rotor 2 ist auf einer Rotorwelle 4 angeordnet. Die Rotorwelle 4 ist in Lagern 5 gelagert, so dass die Rotorwelle 4 um eine Rotationsachse 6 rotierbar ist.

Soweit nachfolgend die Begriffe "axial", "radial" und "tangential verwendet werden, bedeutet "axial" eine Richtung parallel zur Rotationsachse 6. "Radial" ist eine Richtung orthogonal zur Axialrichtung direkt auf die Rotationsachse 6 zu bzw. von ihr weg. "Tangential" ist eine Richtung, die sowohl orthogonal zur Axialrichtung als auch orthogonal zur Radialrichtung gerichtet ist. Tangential ist also eine Richtung, die bei einer konstanten Axialposition und in einem konstanten radialen Abstand von der Rotationsachse 6 kreisförmig um die Rotationsachse 6 herum gerichtet ist.

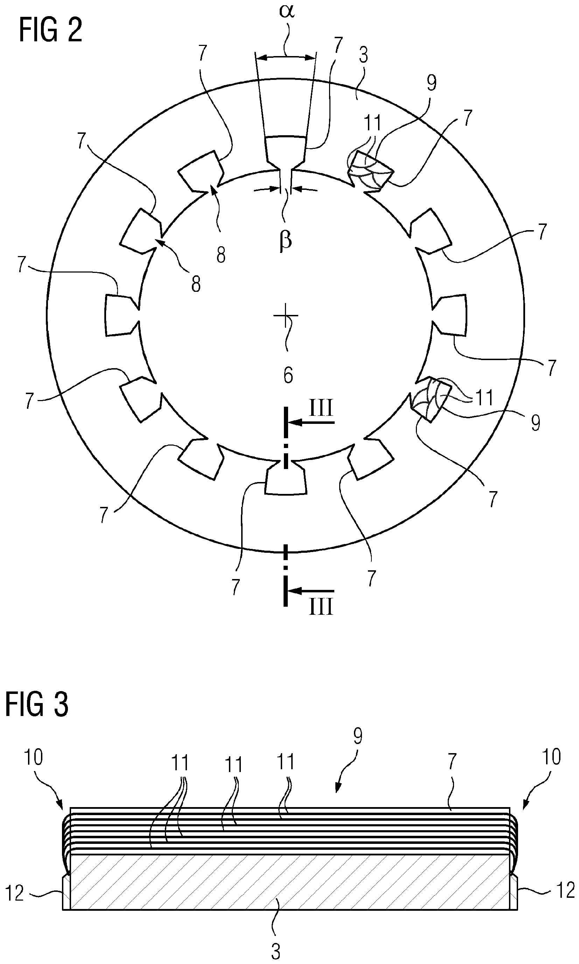

Das Statorblechpaket 3 weist - siehe insbesondere die FIG 2 und 3 - eine Anzahl von Statornuten 7 auf. Die Statornuten 7 verlaufen parallel zur Rotationsachse 6 der elektrischen Maschine 1. Sie sind kreisförmig um die Rotationsachse 6 herum verteilt angeordnet. In der Ausgestaltung gemäß den FIG 1 bis 3 sind die Statornuten 7 zur Rotationsachse 6 hin - also nach radial innen hin - offen. Die Statornuten 7 erstrecken sich in Tangentialrichtung jeweils über einen Winkel a, nachfolgend als Nutwinkel bezeichnet. An ihrem der Rotationsachse 6 zugewandten Ende verjüngen sich die Statornuten 7 jedoch. In diesem verjüngten Bereich 8 - nachfolgend als Spaltbereich bezeichnet - erstrecken sich die Statornuten 7 lediglich über einen Winkel β, nachfolgend als Spaltwinkel bezeichnet. Der Spaltwinkel β ist kleiner als der Nutwinkel a. Aufgrund des Spaltwinkels β in Verbindung mit dem radialen Abstand von der Rotationsachse 6 weisen die Spaltbereiche 8 somit in Tangentialrichtung gesehen eine lichte Weite w auf. Die lichte Weite w ergibt sich zu 2rπ*β/360°.

In Verbindung mit der elektrischen Maschine 1 der FIG 1 bis 3, also einer üblichen elektrischen Maschine mit einem Innenrotor, wird die vorliegende Erfindung nachstehend erläutert. Prinzipiell ist die vorliegende Erfindung aber auch anwendbar, wenn die elektrische Maschine 1 als elektrische Maschine mit einem Außenrotor ausgebildet ist. In diesem Fall wären lediglich die Statornuten 7 an ihrer von der Rotationsachse 6 abgewandten Seite offen und würden weiterhin an ihrem von der Rotationsachse 6 abgewandten Ende den gegenüber der übrigen Statornut 7 verjüngten Spaltbereich 8 aufweisen.

In den Statornuten 7 sind die Wicklungen 9 eines Statorwicklungssystems angeordnet. In FIG 2 ist dies jedoch nur für ein Paar von Statornuten 7 dargestellt. In den Statornuten 7 sind die Hauptabschnitte der Wicklungen 9 angeordnet. Wicklungsköpfe 10 der Wicklungen 9 ragen, wie allgemein üblich, gemäß FIG 1 an den beiden axialen Enden des Statorblechpakets 3 über das Statorblechpaket 3 hinaus.

In FIG 3 sind die einzelnen Windungen 11 einer der Wicklungen 9 erkennbar. Ersichtlich sind die Wicklungen 9 in den Statornuten 7 als gelegte Wicklungen ausgebildet. Die einzelnen Windungen 11 verlaufen also in den Statornuten 7 parallel und ohne sich gegenseitig zu überkreuzen.

Das Statorblechpaket 3 weist entsprechend der Darstellung in den FIG 1 bis 3 an seinen beiden axialen Enden keine Führungsstrukturen auf, mittels derer die einzelnen Windungen 11 der Wicklungen 9 geführt werden könnten. Insbesondere weist das Statorblechpaket 3 selbst keine derartigen Führungsstrukturen auf. Falls auf die beiden axialen Enden des Statorblechpakets 3 entsprechend der Darstellung in FIG 3 Endscheiben 12 aufgesetzt sein sollten, sind auch auf den Endscheiben 12 keine derartigen Führungsstrukturen vorhanden.

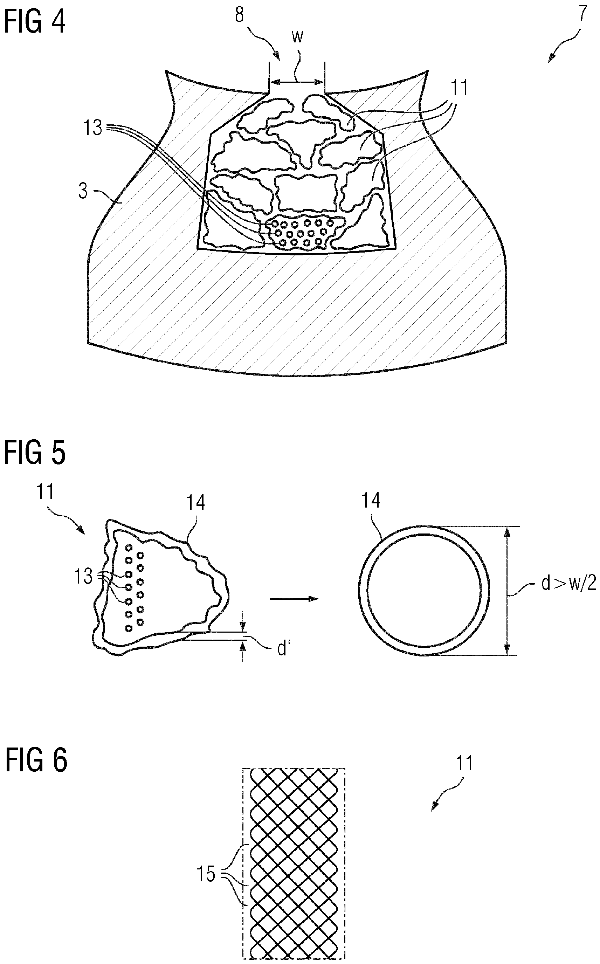

FIG 4 zeigt rein beispielhaft eine der Statornuten 7. Entsprechend der Darstellung in FIG 4 sind die einzelnen Windungen 11 der Wicklungen 9 nicht als massive Rundleiter und auch nicht als massive Flachleiter ausgebildet. Vielmehr sind die einzelnen Windungen 11, von denen in FIG 4 aus Gründen der Übersicht nur einige mit ihrem Bezugszeichen versehen sind, als Litzenleiter ausgebildet. Die Litzenleiter weisen ihrerseits jeweils mehrere Drähte 13 auf. Dies ist in FIG 4 aus Gründen der Übersicht nur für einen der Litzenleiter dargestellt. Von den Drähten 13 sind in FIG 4 aus Gründen der Übersichtlichkeit wieder nur einige mit ihrem Bezugszeichen versehen.

In der jeweiligen Statornut sind mehrere Litzenleiter angeordnet, meist zwischen drei und 15 Litzenleiter. In der Regel sind die Litzenleiter untereinander gleich ausgebildet, weisen also insbesondere den gleichen Querschnitt auf. Sie können aber auch voneinander verschiedene Querschnitte aufweisen. In jedem Fall sind die Litzenleiter jedoch innerhalb gewisser Grenzen verformbar, so dass die Litzenleiter sich entsprechend der Darstellung in FIG 4 eng aneinander anlegen. Dies erhöht den Füllgrad der Statornuten 7. FIG 4 zeigt zugleich auch eine vorteilhafte Ausgestaltung der vorliegenden Erfindung. Denn gemäß FIG 4 liegen die Litzenleiter direkt an den Wänden der Statornuten 7 an. Es befinden sich in der jeweiligen Statornut 7 also keine weiteren isolierenden Elemente, insbesondere keine Schichten aus Papier, zwischen den Seitenwänden und dem Nutgrund der jeweiligen Statornut 7 einerseits und den Litzenleitern andererseits.

FIG 5 zeigt beispielhaft einen einzelnen der Litzenleiter. Entsprechend der Darstellung in FIG 5 weist der Litzenleiter einen Querschnitt auf. Dieser Querschnitt korrespondiert mit einem tatsächlichen oder virtuellen Durchmesser d des Litzenleiters. Wenn mit Q der Querschnitt bezeichnet wird, gilt also die Beziehung Q = (d/2)²*π. Entsprechend der Darstellung in FIG 5 ist dieser Durchmesser d größer als die Hälfte der lichten Weite w. Damit ist der Querschnitt des Litzenleiters größer als der Querschnitt eines Kreises ist, dessen Durchmesser gleich der Hälfte der lichten Weite w der Spaltbereiche 8 ist. Der Durchmesser d kann auch noch größer sein, beispielsweise mindestens 60 %, 70 %, 80 % oder 90 % der lichten Weite w sein. Es ist sogar möglich, dass der Durchmesser d gleich der lichten Weite w selbst oder sogar noch größer ist.

Aufgrund ihres relativ großen Querschnitts können die Litzenleiter nur mit erheblichen Schwierigkeiten oder gar nicht direkt über die Spaltbereiche 8 in die Statornuten 7 eingelegt werden. Es ist aber möglich, die Litzenleiter entsprechend der in der WO 2020/058 048 A1 erläuterten Vorgehensweise auf ein Wickelwerkzeug zu wickeln und sodann in Axialrichtung in die Statornuten 7 einzuziehen. Die Lehre der WO 2020/058048 A1 ist somit grundlegend für die Realisierbarkeit der erfindungsgemäßen elektrischen Maschine 1. Das Wickeln der Wicklungen 9 in die Nuten des Wickelwerkzeugs der WO 2020/058048 A1 wiederum ist unproblematisch, da die Nuten des Wickelwerkzeugs im Gegensatz zu den Statornuten 7 des Statorblechpakets 3 keine verjüngten Spaltbereiche aufweisen.

Die Litzenleiter weisen gemäß FIG 5 an ihrer Außenseite eine jeweilige Isolationsschicht 14 auf. Die Isolationsschicht 14 kann beispielsweise aus PAI (Polyamidimid), aus PI (Polyimid, Markenname Kapton) oder vorimprägniertem Epoxy-Prepreg-Material bestehen. Die Isolationsschicht 14 kann weiterhin auch aus einem thermoplastischen Material bestehen, beispielsweise aus PA (= Polyamid), PO (= Polyolefin) oder PET (= Polyethylen) .

Eine Dicke d' der Isolationsschicht 14 liegt in der Regel zwischen 100 µm und 250 µm, insbesondere zwischen 150 µm und 200 µm. Mittels der Isolationsschichten 14 sind die Litzenleiter gegeneinander und gegenüber dem Statorblechpaket 3 elektrisch isoliert. Es ist möglich, dass die jeweilige Isolationsschicht 14 unmittelbar vor dem Wickeln des jeweiligen Litzenleiters in die Nuten des Wickelwerkzeugs auf den jeweiligen Litzenleiter aufgebracht wird. Entsprechende Vorgehensweisen sind Fachleuten bekannt. Alternativ ist es möglich, dass die Isolationsschichten 14 bereits vorab, also unabhängig von dem Wickeln des jeweiligen Litzenleiters in die Nuten des Wickelwerkzeugs, auf die Litzenleiter aufgebracht werden.

Die einzelnen Drähte 13 der Litzenleiter hingegen sind innerhalb des jeweiligen Litzenleiters gegeneinander nicht elektrisch isoliert. Es kann also ohne weiteres ein elektrischer Kontakt benachbarter Drähte der Litzenleiter miteinander bestehen. Die Drähte 13 sind also auch nicht mit einem Drahtlack oder dergleichen versehen. Vielmehr sind die Drähte 13 "blanke" Drähte 13.

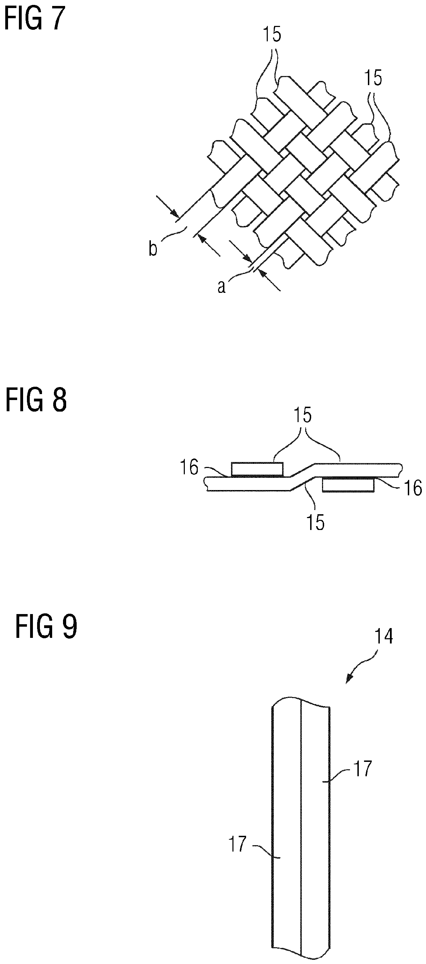

Die Isolationsschicht 14 des jeweiligen Litzenleiters ist entsprechend der Darstellung in FIG 6 vorzugsweise aus mehreren Strängen 15 geflochten. Die einzelnen Stränge 15 des Geflechts sind entsprechend der Darstellung in den FIG 7 und 8 vorzugsweise als Band ausgebildet. Der Abstand a der einzelnen Bänder voneinander ist in aller Regel erheblich kleiner als die Breite b der einzelnen Bänder. Meist gilt, dass der Abstand a bei 50% der Breite b der einzelnen Bänder liegt, oftmals sogar darunter, beispielsweise bei 25% der Breite b der einzelnen Bänder oder darunter.

Die Isolationsschichten 14 bestehen somit vorzugsweise aus Bändern. Überlappungsbereiche der Bänder sind vorzugsweise miteinander verklebt. Mit dem Bezugszeichen 16 sind entsprechende Klebestellen bezeichnet. Die Klebestellen 16 können beispielsweise durch thermische Vernetzung, leichtes thermisches Aufschmelzen oder durch Haftklebstoffe bewirkt werden.

Vorzugsweise sind die Isolationsschichten 14 geschlossen. Die Isolationsschichten 14 weisen also vorzugsweise keinerlei Zwischenräume, Lücken oder nicht überdeckte Stellen auf. Beispielsweise können die Isolationsschichten 14 entsprechend der Darstellung in FIG 9 jeweils zwei oder mehr Lagen 17 aufweisen, wobei die Lagen 17 jeweils als Geflecht ausgebildet sind und weiterhin aneinander angrenzende Lagen 17 auf Lücke zueinander geflochten sind, so dass die Lücken der einen Lage 17 durch Geflecht der anderen Lage 17 verdeckt sind. Um eine vollständige Überdeckung zu erreichen, sind auch andere Ausgestaltungen der Isolationsschichten 14 möglich. Beispielsweise kann das Geflecht, aus dem die Isolationsschichten 14 bestehen, mehr als zwei miteinander verflochtene Bänder aufweisen, so dass im Ergebnis auch durch eine einzelne Schicht oder Lage 17 eine vollständige Überdeckung entsteht.

Zusammengefasst betrifft die vorliegende Erfindung somit folgenden Sachverhalt:
Eine elektrische Maschine 1 weist ein Statorblechpaket 3 auf, das seinerseits Statornuten 7 aufweist, die parallel zu einer Rotationsachse 6 der elektrischen Maschine 1 verlaufen und kreisförmig um die Rotationsachse 6 herum verteilt angeordnet sind. Die Statornuten 7 sind zur Rotationsachse 6 hin offen, weisen aber an ihrem der Rotationsachse 6 zugewandten Ende einen gegenüber der übrigen Statornut 7 verjüngten Spaltbereich 8 auf oder sind an ihrer von der Rotationsachse 6 abgewandten Seite offen, weisen aber an ihrem von der Rotationsachse 6 abgewandten Ende einen gegenüber der übrigen Statornut 7 verjüngten Spaltbereich 8 auf. Die Spaltbereiche 8 weisen in Umfangsrichtung um die Rotationsachse 6 herum gesehen eine lichte Weite w auf. In den Statornuten 7 sind die Wicklungen 9 eines Statorwicklungssystems angeordnet. Die Wicklungen 9 in den Statornuten 7 sind als gelegte Wicklungen ausgebildet. Sie bestehen aus Litzenleitern, die ihrerseits jeweils mehrere Drähte 13 aufweisen. Die Litzenleiter weisen einen Querschnitt auf, der größer als der Querschnitt eines Kreises ist, dessen Durchmesser d gleich der Hälfte der lichten Weite w der Spaltbereiche 8 ist.

Die vorliegende Erfindung weist viele Vorteile auf. Insbesondere kann trotz der größeren Dicke d' der Isolationsschichten 14 der Füllgrad der Statornuten 7 maximiert werden. Damit kann bei im übrigen gleicher Dimensionierung der elektrischen Maschine 1 das Drehmoment erhöht werden bzw. zur Erreichung des gleichen Drehmoments die elektrische Maschine 1 kleiner dimensioniert werden. Ein weiterer Vorteil zeigt sich im Umrichterbetrieb der elektrischen Maschine 1. Denn durch den elektrischen Kontakt der Drähte 13 innerhalb des jeweiligen Litzenleiters können kurzzeitige Impulse, wie sie im Umrichterbetrieb typischerweise auftreten, besser auf die elektrische Maschine 1 übertragen werden. Aufgrund der relativ großen Dicke d' der Isolationsschichten 14 steigen insbesondere im Umrichterbetrieb weiterhin die TE-Einsetzspannung, die Belastbarkeit und die Lebensdauer der elektrischen Maschine 1.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine ein Statorblechpaket (3) aufweist,
- wobei das Statorblechpaket (3) eine Anzahl von Statornuten (7) aufweist, die parallel zu einer Rotationsachse (6) der elektrischen Maschine verlaufen und kreisförmig um die Rotationsachse (6) herum verteilt angeordnet sind,
- wobei die Statornuten (7) zur Rotationsachse (6) hin offen sind, an ihrem der Rotationsachse (6) zugewandten Ende aber einen gegenüber der übrigen Statornut (7) verjüngten Spaltbereich (8) aufweisen oder an ihrer von der Rotationsachse (6) abgewandten Seite offen sind, an ihrem von der Rotationsachse (6) abgewandten Ende aber einen gegenüber der übrigen Statornut (7) verjüngten Spaltbereich (8) aufweisen,
- wobei die Spaltbereiche (8) in Umfangsrichtung um die Rotationsachse (6) herum gesehen eine lichte Weite (w) aufweisen,
- wobei in den Statornuten (7) die Wicklungen (9) eines Statorwicklungssystems angeordnet sind,
- wobei die Wicklungen (9) in den Statornuten (7) als gelegte Wicklungen ausgebildet sind,
**dadurch gekennzeichnet,**
- **dass** die Wicklungen (9) aus Litzenleitern bestehen, die ihrerseits jeweils mehrere Drähte (13) aufweisen,
- **dass** die Litzenleiter einen Querschnitt aufweisen und
- **dass** der Querschnitt der Litzenleiter größer als der Querschnitt eines Kreises ist, dessen Durchmesser (d) gleich der Hälfte der lichten Weite (w) der Spaltbereiche (8) ist.

2. Elektrische Maschine nach Anspruch 1, **dadurch gekennzeichnet , dass** die Drähte (13) der Litzenleiter innerhalb des jeweiligen Litzenleiters nicht gegeneinander isoliert sind.

3. Elektrische Maschine nach Anspruch 1 oder 2, **dadurch gekennzeichnet , dass** die Litzenleiter an ihrer Außenseite eine jeweilige geflochtene Isolationsschicht (14) aufweisen.

4. Elektrische Maschine nach Anspruch 3, **dadurch gekennzeichnet , dass** die jeweilige Isolationsschicht (14) geschlossen ist.

5. Elektrische Maschine nach Anspruch 3 oder 4, **dadurch gekennzeichnet , dass** die Isolationsschichten (14) aus Bändern bestehen.

6. Elektrische Maschine nach Anspruch 5, **dadurch gekennzeichnet , dass** Überlappungsbereiche der Bänder miteinander verklebt sind.

7. Elektrische Maschine nach einem der Ansprüche 3 bis 6, **dadurch gekennzeichnet, dass** die Isolationsschichten (14) eine Dicke (d') von 100 µm bis 250 µm aufweisen, insbesondere von 150 µm bis 200 µm.

8. Elektrische Maschine nach einem der obigen Ansprüche, **dadurch gekennzeichnet , dass** die Litzenleiter direkt an den Wänden der Statornuten (7) anliegen.
